# EUROPÄISCHE PATENTSCHRIFT

(11) **EP 2 027 447 B1**
(45) Veröffentlichungstag und Bekanntmachung des Hinweises auf die Patenterteilung: **11.07.2012**
(21) Anmeldenummer: 07725369.8
(22) Anmeldetag: 18.05.2007
(51) Int. Cl.: G01N 1/28

(54) **VORRICHTUNG UND VERFAHREN ZUR AUTOMATISIERTEN REPRODUZIERBAREN HERSTELLUNG VON AUF OBJEKTTRÄGERN ANGEORDNETEN ZU UNTERSUCHENDEN ZELL- ODER GEWEBEPROBEN**
DEVICE AND METHOD FOR THE AUTOMATED AND REPRODUCIBLE PRODUCTION OF CELL OR TISSUE SAMPLES THAT ARE TO BE ANALYZED AND ARE ARRANGED ON OBJECT SUPPORTS
DISPOSITIF ET PROCÉDÉ DE PRODUCTION AUTOMATISÉE REPRODUCTIBLE D'ÉCHANTILLONS CELLULAIRES OU TISSULAIRES À ANALYSER PLACÉS SUR DES PORTE-OBJETS

(30) Priorität: 19.05.2006 DE 102006023626; 16.04.2007 DE 102007017807
(43) Veröffentlichungstag der Anmeldung: 25.02.2009
(73) Patentinhaber: Merz, Hartmut, 23627 Gross Grönau (DE)
(72) Erfinder: Merz, Hartmut, 23627 Gross Grönau (DE)
(74) Vertreter: Grosse, Felix Christopher
(86) Internationale Anmeldenummer: PCT/EP2007/004461
(87) Internationale Veröffentlichungsnummer: WO 2007/134814

(56) Entgegenhaltungen:
- EP-A1- 0 117 262
- WO-A-01/22086
- WO-A-01/31317
- WO-A-2004/039938
- WO-A-2005/073693
- US-A1- 2004 026 938
- KANONEN J ET AL: "TISSUE MICROARRAYS FOR HIGH-THROUGHPUT MOLECULAR PROFILING OF TUMORSPECIMENS" NATURE MEDICINE, NATURE PUBLISHING GROUP, NEW YORK, NY, US, Bd. 4, Nr. 7, Juli 1998 (1998-07), Seiten 844-897, XP002934472 ISSN: 1078-8956

## Beschreibung

Die Erfindung betrifft eine Vorrichtung zur automatisierten reproduzierbaren Herstellung von auf Objektträgern angeordneten zu untersuchenden Zell- oder Gewebeproben, insbesondere eines Patientenmaterials, wobei die Vorrichtung eine Mehrzahl von modularen Stationen umfasst, die jeweils einen Arbeitsschritt in einer Gesamtfolge von Arbeitsschritten ausführen, gemäß dem Oberbegriff des Anspruchs 1. Zudem betrifft die Erfindung ein Verfahren zur Herstellung derartiger Proben, gemäß dem Oberbegriff des Anspruchs 15.

In der jüngeren Vergangenheit ist durch die Verbesserung gentechnischer Analyseverfahren ein erhöhter Bedarf an Gewebeuntersuchungen entstanden. Insbesondere wird im Rahmen der Onkologie bei der Behandlung und Diagnose von Krebs vermehrt auf die Genexpressionsanalyse gesetzt. Bei einer derartigen Analyse wird die Tatsache ausgenutzt, dass von 25.000 vorhandenen Genen des menschlichen Genoms häufig nur 200 bis 300 bestimmend für die Funktion eines Tumors sind. Aus diesen charakteristischen Genen können wiederum häufig 20 bis 30 extrahiert werden, die ohne signifikante Verschlechterung der statistischen Aussage eine verlässliche Aussage über den Tumorzustand, die Wirkungsweise einer Behandlung und den Verlauf der Erkrankung geben können. Mit einer Genexpressionsanalyse werden Tumore darauf untersucht, ob-spezielle Gene ein-/ausgeschaltet sind bzw. welche Gene vorhanden sind. Dies geschieht anhand von Zell- oder Gewebeproben, die mittels spezieller Antikörper untersucht werden, welche dann über Färbeverfahren zu einem spezifischen Nachweis der Gene im Gewebe führen.

Bisher bekannte Anordnungen und Verfahren, wie zum Beispiel offenbart in der EP 1370639 und der WO 01/22086, setzen dabei Gewebefelder ein, die aus Feldanordnungen verschiedener Gewebeproben bestehen und gleichzeitig einem Agens ausgesetzt werden, mit dem ein spezifischer Antikörper auf die verschiedenen Gewebeproben aufgebracht werden kann. Nach einem anschließenden Färben können alle verschiedenen auf dem Objektträger untergebrachten Gewebeproben unter dem Mikroskop untersucht werden.

Zur Vorbereitung der Gewebeproben werden zunächst Gewebeblöcke aus zu untersuchendem Gewebe ausgestanzt und in einen Paraffinblock eingebracht. Die Größe der Gewebeblöcke hängt dabei vom beabsichtigten Stanzdurchmesser ab. Aus mehreren derartigen Paraffinblöcken werden dann so genannte Bereichsblöcke gebildet, indem jeweils mit dünnen Proberöhrchen der dort im Paraffinblock vorhandenen Gewebeprobe ein Stanzzylinder entnommen wird und in einem weiteren Paraffinblock nach Art eines Feldes eingebracht wird, sodass beispielsweise bis zu 240 unterschiedliche Gewebeproben unterschiedlicher Herkunft in einem solchen Block untergebracht werden können. Zur anschließenden Untersuchung wird dann ein Teilschnitt quer zu den Zylinderachsen vorgenommen und dadurch eine dünne Schicht der verschiedenen Gewebeproben erhalten, praktisch nach Art eines Rasters eingebettet in Paraffin, welche auf einen Objektträger aufgebracht und untersucht werden kann.

Derartige Anordnungen und die anschließenden Untersuchungsverfahren haben insbesondere den Nachteil, dass keine individualisierten, das heißt patientenbezogenen Untersuchungen damit möglich sind, weil immer wieder der gesamte Probenbereich, der einmal in einem Wachszylinder zusammengefasst wurde, gemeinsam untersucht wird bzw. untersucht werden muss. Weiterhin besteht ein Nachteil dieses Verfahrens darin, dass eine große Anzahl von Proben lediglich mit einem Untersuchungsagens untersucht werden kann.

Wie eingangs erwähnt, besteht jedoch ein hoher Bedarf, je Patient eine Vielzahl Untersuchungen an Gewebeproben ein und desselben Gewebes durchzuführen, diese jedoch mit unterschiedlichsten Agenzien, das heißt mit Antikörpern oder Sonden für spezifische Gene, die beispielsweise je nach Krebstyp zu untersuchen sind.

Aus der US 4647543 ist ein Verfahren zu serologischen Untersuchungen von Antikörpern im Blut eines Patienten bekannt, das hauptsächlich dazu verwendet wird, um Autoimmunkrankheiten bei den Probanden zu diagnostizieren. Bei diesem Verfahren werden im Blut vorhandene Antikörper dazu gebracht, mit speziell dafür präpariertem Indikatorgewebe zu reagieren, um durch eine Färbung des Gewebes eine Indikation für das Vorhandensein von Antikörpern spezifischer Art im Blut zu erhalten. Es wird dabei weder eine strukturelle Untersuchung des Gewebes durchgeführt, noch ist es mit dem dort eingesetzten Färbeverfahren möglich, eine gute morphologische Auflösung spezifischer Strukturen des Gewebes erkennbar zu machen.

Die WO 2005/073693 A1 beschreibt eine Vorrichtung gem. Oberbegriff des Anspruchs 1.

Ferner beschreibt die US 2004/0026938 A1 eine Vorrichtung zur Ausstanzung von Mikrochips (ICs) aus einem Wafer im Bereich der Halbleitertechnik. Der Antrieb der Wafer- Stanzvorrichtung ist jedoch auf über eine aufwendige Mechanik realisiert.

Die der Erfindung zugrunde liegende Aufgabe besteht darin, eine Vorrichtung und ein Verfahren zur Aufbereitung von zu untersuchendem Gewebe auzugeben, die es erlauben, auf technisch einfache Weise mehrere Proben eines einzigen Gewebes gemeinsam und synchron aufzubereiten. Insbesondere soll diese Aufbereitung es ermöglichen, dass verschiedene Aufbereitungsverfahren gleichzeitig zur Anwendung kommen können. Die Vorrichtung soll dabei einfach und robust aufgebaut sein und einen kontinuierlichen Betrieb gewährleisten.

Diese Aufgabe wird durch die kennzeichnenden Merkmale des Anspruchs 1 hinsichtlich der Vorrichtung und durch die kennzeichnenden Merkmale des Anspruchs 15 hinsichtlich des Verfahrens gelöst. Vorteilhafte Ausgestaltungen der Vorrichtung bzw. des Verfahrens ergeben sich aus den abhängigen Unteransprüchen.

Die erfindungsgemäße Vorrichtung weist mindestens eine Einrichtung zum lagerichtigen Positionieren der Proben auf einem Objektträger auf sowie eine Einrichtung zum Fördern des bestückten Objektträgers zu den einzelnen Bearbeitungsstationen, wobei die Fördereinrichtung in vorteilhafter Weise zentral in der Vorrichtung gelagert ist und an ihrer Peripherie Stationen zur weiteren Bearbeitung verteilt angeordnet sind.

Dabei kann die Fördereinrichtung von einem drehbar gelagerten Rundtisch gebildet sein, der taktweise in gleichen zeitlichen Takten bewegt wird, wenn beispielsweise mehrere Objektträger von der Fördereinrichtung gleichzeitig gefördert werden, oder der kontinuierlich programmgesteuert bewegt wird, wenn die Fördereinrichtung nur einen Objektträger den einzelnen Bearbeitungsstationen nacheinander zuführt. Während bei gleichzeitiger Bearbeitung mehrerer Objektträger an verschiedenen Arbeitsstationen der Vorschub in Uhrzeigerrichtung anhand der längsten Verweildauer an einer Arbeitsstation eingestellt werden muss, können bei der Durchleitung nur eines Objektträgers die Arbeitszyklen an den einzelnen Arbeitsstationen unterschiedlich sein.

Gemäß einem weiteren vorteilhaften Merkmal der Erfindung ist die Fördereinrichtung auf einem sockelartigen Gehäuse gelagert, in welchem der Antrieb und/oder die Steuerung für die Fördereinrichtung aufgenommen ist/sind. Auch können hier pneumatische und hydraulische Druckleitungen angeschlossen sein, über welche den Funktionsteilen der Arbeitsstationen Druckmittel zugeführt werden.

Vorteilhaft sind die modularen Bearbeitungsstationen in einem Raster aus konstanten Winkeln zueinander über den Umfang der Fördereinrichtung verteilt angeordnet, so dass ihnen die Objektträger taktweise mittels der Fördereinrichtung zuführbar sind. Die Fördereinrichtung weist an ihrer Peripherie in weiterer vorteilhafter Ausgestaltung des Gegenstands der Erfindung Aufnahmeeinrichtungen auf, in welche Objektträger zur Lagesicherung während der Förderung einführbar sind. Hier können an sich bekannte Rasteinrichtungen Anwendung finden, die ein vorübergehendes Fixieren und Lösen der Objektträger ermöglichen.

Die Bearbeitungsstationen sind auf der Oberseite des sockelartigen Gehäuses angeordnet, wobei die Objektträger der Vorrichtung über eine Eingabestation zugeführt werden. Dieser Eingabestation ist vorteilhaft ein Objektträgermagazin zugeordnet, aus welchem die Objektträger programmgesteuert aufeinander folgend zuführbar sind. Dabei können Magazine Anwendung finden, die auswechselbar sind und ein Speichervolumen von wenigstens 150 Objektträgern aufweisen.

Des Weiteren weist die Vorrichtung in vorteilhafter Weise eine Station zur Fixierung der Proben auf einem Objektträger auf, wobei diese Station einen Dispenser für einen Kleber zum Auftragen von separierten positionierten Kleberrationen definierter Größe auf einen Objektträger besitzt. Mittels bekannter Pipettentechniken kann der Kleber in einem vorgegebenen Raster auf die Oberfläche des Objektträgers aufgetragen werden, wobei es sich bei dem Kleber vorzugsweise um einen UV-Kleber-Typ handelt, wie beispielsweise Loctite 3491.

Als nächste Station besitzt die Vorrichtung in vorteilhafter Weise eine Einrichtung zum Zuführen einer mit Zell- oder Gewebeschnitten versehenen Probenfolie aus einem ersten transparenten Substrat zu einem Objektträger sowie eine Stanze zur Segmentierung der Proben und eine Separierungsvorrichtung für die Proben. Die Zuführeinrichtung, die Stanze und die Separierungsvorrichtung sind in einer Arbeitsstation zusammengefasst.

Vorteilhaft umfasst die Separierungsvorrichtung eine Kurvenscheibe, mittels welcher eine Vielzahl von Greifeinrichtungen über Kurvenbahnen aus einer im Wesentlichen zentralen Lage in eine definierte Position auf Abstand zueinander bewegbar sind. Dabei sind die Greifeinrichtungen von Zylindern mit pneumatisch betätigten Saugnäpfen gebildet. Die Separierungseinrichtung ist zwischen der Stanze und dem Objektträger bewegbar gelagert.

Nachdem die mit Zell- oder Gewebeschnitten versehene Probefolie aus dem ersten transparenten Substrat von außen automatisch in die Zuführeinrichtung eingeführt worden ist, stanzt die Stanze die Proben aus der Probenfolie aus, wobei sie von unten gegen die oberhalb der Folie an die Folie angedrückten und als Widerlager dienenden Greifeinrichtungen anfährt. Während die segmentierten ausgestanzten Folienstücke von den unter Unterdruck stehenden Saugnäpfen gehalten werden, wird die Separierungseinrichtung von der Stanze weg zu dem rasterartigen Objektträger bewegt, wobei sich gleichzeitig die Zylinder mit den pneumatisch betätigten Saugern über die Kurvenbahnen nach außen bewegen und dadurch die segmentierten Proben lagerichtig in dem Raster des Objektträgers positionieren.

Nachdem die Proben mittels der Greifeinrichtungen auf dem Objektträger abgesetzt sind und durch die tropfenförmigen UV-Kleber am Verrutschen gehindert werden, wird der Objektträger einer weiteren Bearbeitungsstation zugeführt, in welcher der Kleber unter Einfluss einer UV-Lichtbestrahlung ausgehärtet wird. Nach dem Aushärten des Klebers wird der Objektträger einer Beschriftungs- und/oder Etikettierstation zugeführt, in welcher der Objektträger insbesondere mit einem Barcode beschriftet oder etikettiert wird. Schließlich kann in vorteilhafter Weise auch eine Kamerastation für die visuelle Erkennung der einzelnen Proben und die Auswahl geeigneter Proben sowie die Abtrennung von ungeeignetem Probenmaterial vorgesehen sein.

Wenn der Objektträger mit den segmentierten und lagerichtig positionierten Proben fertig gestellt ist, wird er einer Ausgabestation zugeführt, in welcher die fertigen Objektträger zur Weiterbearbeitung an eine nachfolgende Vorrichtung ausgegeben werden, in welcher z.B. ein Erhitzen und Einfärben der auf dem Objektträger angeordneten Proben erfolgt.

Die Vorrichtung kann ferner in vorteilhafter Weise ein Bedienpanel aufweisen, über welches eine Steuerung zur Einstellung der Bearbeitungsmodi an den Bearbeitungsstationen einstellbar ist. Das Gehäuse der Vorrichtung weist einen Rahmen aus Aluminiumprofilen auf, der für den erforderlichen Eingriffsschutz mit einer abnehmbaren Abdeckung versehen ist. Dieser Aufbau ermöglicht eine hohe Flexibilität und spart Gewicht, da die Vorrichtung als Tischgerät ausgeführt ist, so dass ein einfacher Transport gewährleistet ist.

Besonders vorteilhaft wird ein rasterartiger Objektträger verwendet, der mehrere gleich bemessene Reaktionszonen aufweist, wobei einzelne Gewebe-Substrateinheiten in Reaktionszonen untergebracht sind, wobei das Substrat flexibel und transparent ausgestaltet ist und die jeweiligen Reaktionszonen mit hydrophoben Umrandungen versehen sind.

Auf diese Weise wird ein standardisierter Untersuchungsträger verwendet, mit dem bei der Durchführung spezieller Genexpressionsanalysen an Gewebematerial unterschiedliche Aufbereitungsflüssigkeiten durch Pipetten aufgebracht werden können.

Vorzugsweise ist über den Reaktionszonen des Objektträgers eine Abdeckung aufbringbar ist, um den Objektträger bzw. die Gewebe-Substrateinheiten in den Reaktionszonen für eine spätere Beobachtung zu konservieren.

Die Dicke des Objektträgers überschreitet insgesamt nicht den Abstand zwischen einem Objektträger eines Lichtmikroskops und dessen Okularobjektivtubus.

Vorzugsweise sind die Höhe der Umrandung einer Reaktionszone und die Dicke des Substrats, sowie jene des darauf befindlichen Gewebes aufeinander abgestimmt, so dass eine gewünschte Aufbereitung mit der Reaktionsflüssigkeit noch erfolgen kann, aber dass möglichst genau die Menge von Flüssigkeit eingebracht wird, die für eine Reaktion zur Aufbereitung ausreicht, sodass keine teureren Flüssigkeiten verschwendet werden müssen, bzw. eine handelsüblich standardisiert vertriebene Flüssigkeitsmenge für die Aufbereitung von mehr Proben als bisher ausreicht.

Der Abstand der Reaktionszonen des Objekträgers entspricht dem Abstand von standardisierten Pipettenträgern, weil auf diese Weise simultan mehrere Reaktionsflüssigkeiten gleichzeitig in unterschiedliche Reaktionszonen eingebracht werden können, um nach Fertigstellung der mit den Proben versehenen Objektträger diese einer nachfolgenden Färbebehandlung durch Zuführung von Reaktionsflüssigkeiten zu unterwerfen.

Der Objektträger weist vorzugsweise ein Textfeld auf, in welchem ein Identifikationscode, insbesondere in Form eines Barcodes aufbringbar ist. Mittels des Identifikationscode können die die zu untersuchenden Zell- oder Gewebeschnitte enthaltenden jeweiligen Objektträger dem einzelnen Patienten später zugeordnet werden.

Die Reaktionszonen des Objektträgers sind vorzugsweise durch Beschichtung des Objektträgers mit einem aufgespritzten Rahmen oder einer Folie aus anderem hydrophoben Material, in die die Reaktionszonen eingelassen sind, gebildet.

In besonders vorteilhafter Weise wird die erfindungsgemäße Vorrichtung zur Genexpressionsuntersuchung von menschlichem Zellgewebe eingesetzt.

Weitere Vorteile, Merkmale und Einzelheiten der Erfindung ergeben sich aus der nachfolgenden Beschreibung von bevorzugten Ausführungsbeispielen anhand der Figuren Darin zeigen:
- Fig. 1: ein Beispiel einer zu untersuchenden Genmenge,
- Fig. 2: ein Beispiel der zylindrischen Probeentnahme aus in Wachswürfeln eingebetteten Gewebeproben,
- Fig. 3: die Aufbereitung von Gewebeprobefeldern und die Aufbringung des Gewebeprobenfeldes auf einen Objektträger,
- Fig. 4: veranschaulichend die Probleme bei der Untersuchung von Stanzzylindergewebeproben, die in einem Gewebefeld zusammengefasst sind,
- Fig. 5: eine Gewebeprobe zur Färbung auf einem Objektträger,
- Fig. 6: die Unterteilung eines auf einem Substrat befestigten flächigen Gewebeschnittes in einzelne Gewebe-Substrateinheiten zur weiteren Verarbeitung,
- Fig. 7: eine perspektivische Gesamtansicht der erfindungsgemäßen Vorrichtung mit Gehäuseabdeckung,
- Fig. 8: eine perspektivische Gesamteinsicht der erfindungsgemäßen Vorrichtung ohne Gehäuseabdeckung und geöffnetem Sockel,

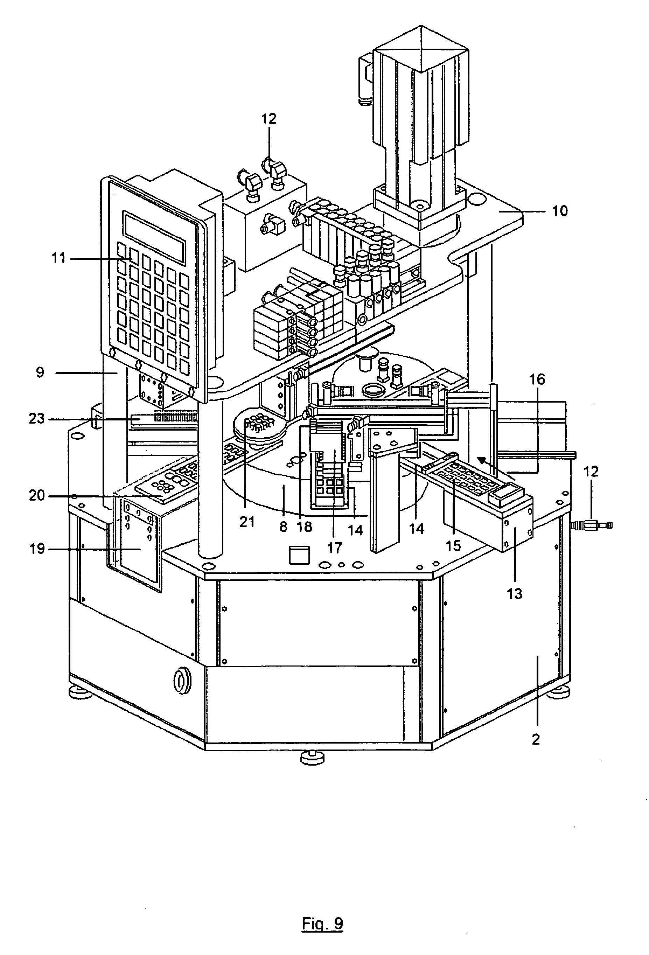

- Fig. 9: eine perspektivische Gesamteinsicht der erfindungsgemäßen Vorrichtung ohne Gehäuseabdeckung, etwas im Uhrzeigersinn gedreht,
- Fig. 10: eine perspektivische Ansicht der Fördereinrichtung mit eingesetzten Objektträgern und zwei an der Peripherie angeordneten Bearbeitungsstationen,
- Fig. 11: eine perspektivische Ansicht der Separierungsvorrichtung in Draufsicht,
- Fig. 12: eine perspektivische Unteransicht der Separierungsvorrichtung,
- Fig. 13: ein Ausführungsbeispiel eines Objektträgers,
- Fig. 14: an einem Schnitt entlang der Linie A-A veranschaulichend die Abmessungen einer Reaktionszone mit eingebrachter Gewebe-Substrateinheit und
- Fig. 15: schematisch die Beschickung der Reaktionszonen auf dem Objektträger mit Aufbereitungsreagenzien,

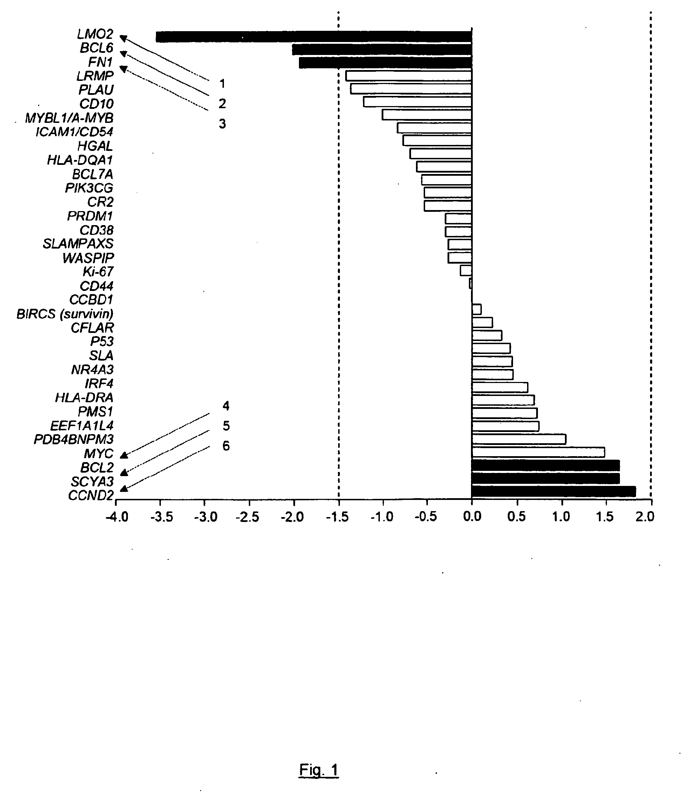

Fig. 1 zeigt anhand eines Beispiels die Vielfalt von zu untersuchenden Genen bei einer speziellen Krebsart. Einzelheiten der Darstellung sind dem Artikel von Lossos et al. "Prediction of Survival in Diffuse Large-B-Cell Lymphoma Based on the Expression of Six Genes" N. Engl J Med 2004; 350: 1828-37 im New England Journal of Medicine entnommen.

Die im Verlaufe dieser Beschreibung der Erfindung häufig verwendeten Begriffe "Aufbereitung" und "aufbereiten" sollen eine auch schrittweise Vorbereitung von zu untersuchendem Gewebe für einzelne Untersuchungsstationen bedeuteten.

Insbesondere ist weiter in Fig. 1 zu erkennen, dass die Gene A, B und C bzw. D, E und F statistisch besonders signifikant sind, sodass sie als repräsentativ für die hier dargestellte Genmenge gelten können, was ihre Aussagekraft in Bezug auf die Diagnose des Gewebes anbelangt.

Hier ist besonders zu erkennen, dass die Gene A, B und C speziell charakteristisch sind in Bezug auf statistisch längeres Überleben eines Patienten, während die Gene D, E und F speziell charakteristisch sind in Bezug auf statistisch kürzeres Überleben eines Patienten.

Anhand der Darstellung in Fig. 1 kann leicht erkannt werden, dass ein großer Bedarf an der Aufbereitung von spezifischem Gewebe in Bezug auf die Untersuchung mit spezifischen Antikörpern für mehrere Gene besteht.

Insbesondere besteht auch ein Bedarf darin, dies technisch wirkungsvoll und schnell und unter möglichst hoher Ausnutzung der vorhandenen Untersuchungsflüssigkeiten durchführen zu können.

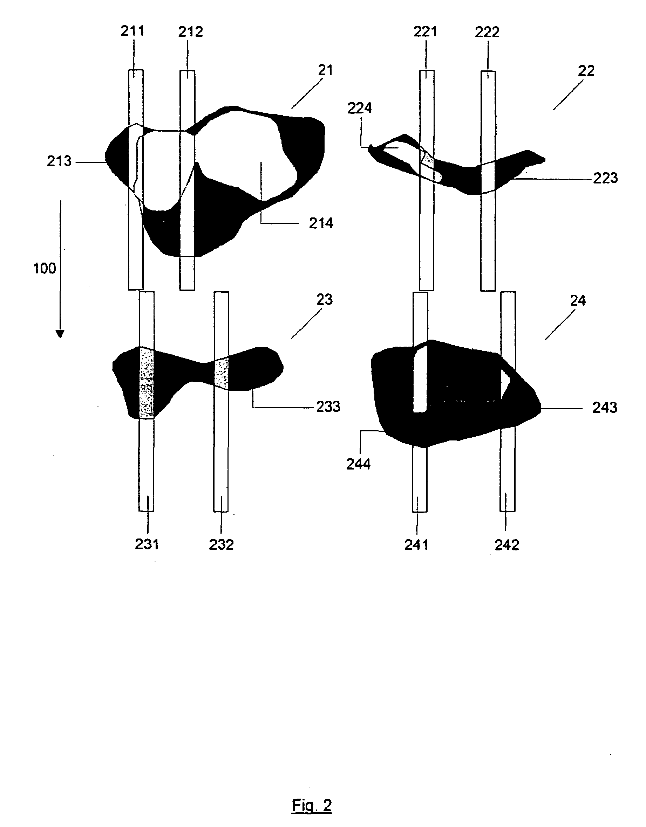

Fig. 2 veranschaulicht anhand eines Beispiels von unterschiedlichen Gewebeproben, die Gewebeentnahme in Form von Stanzzylindern. Ein derartiges Verfahren ist beispielsweise in EP 1370639 A1 offenbart. Wie in Fig. 2 zu erkennen ist, sind dort einzelne Gewebeproben in Paraffinwürfeln 21, 22, 23 und 24 angeordnet. Die Paraffinwürfel sind hier im Schnitt dargestellt. Der Würfel 21 enthält Gewebepartikel 213 und 214, aus denen Gewebezylinder 211 und 212 ausgestanzt werden. Die Stanzung erfolgt hier in einer Richtung 100. Der Paraffinwürfel 22 enthält Gewebebestandteile 223 und 224, aus denen zylindrische Proben 221 und 222 entnommen werden.

Der Paraffinwürfel 23 enthält Gewebe 233, aus dem Zylinder 231 und 232 ausgestanzt werden. Der Paraffinwürfel 24 enthält Gewebe 244 und 243, aus dem Gewebezylinder 241 und 242 ausgestanzt werden.

Es kann bereits hier deutlich erkannt werden, dass das Gewebe bezüglich seiner Gewebezusammensetzung, beispielsweise bei 213 und bei 214 inhomogen ist und ebenso auch eine unterschiedliche Tiefenausdehnung hat, sodass in den einzelnen Stanzzylindern beim Ausstanzen teilweise mehr oder weniger Gewebe zu liegen kommt. Im Falle der Stanzzylinder 212 und 241 wird besonders viel Gewebe entnommen, während im Falle der Stanzzylinder 221 und 222 weniger Gewebe entnommen wird. Es ist auch deutlich zu erkennen, dass bezüglich der Tiefenausdehnung der Zylinder beispielsweise im Bereich des Zylinders 212 in der Tiefenabfolge in der Richtung 100 unterschiedliche Gewebeschichten übereinander zu liegen kommen.

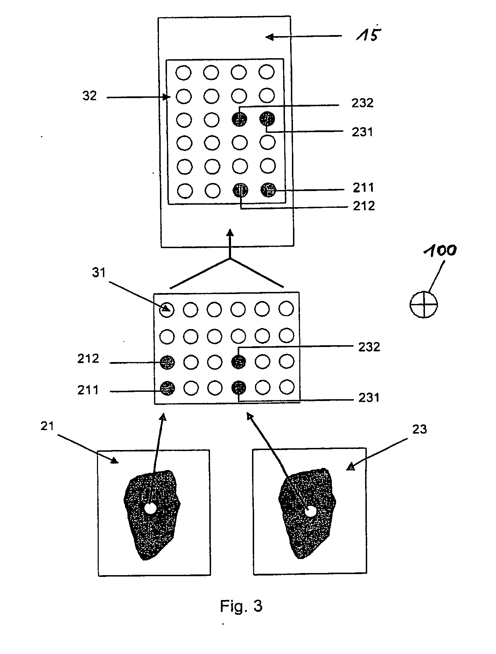

Fig. 3 zeigt eine weitere Darstellung zur Veranschaulichung, wie aus in Paraffinwürfeln eingebetteten Gewebeproben durch zylindrische gestanzte Probenentnahme Probenfelder werden, die auf einem Objektträger aufgebracht werden können.

In Analogie zu Fig. 2 sind hier wieder Paraffinwürfel 21 und 23 dargestellt, aus denen Probezylinder 211 und 212 respektive 231 und 232 entnommen werden. Die Richtung 100 zeigt hier in die Zeichenebene. Wie weiter erkannt werden kann, werden die aus den Paraffinwürfeln 21 und 23 entnommenen Zylinder in einem weiteren Paraffinzylinder 31 in regelmäßigen Abständen feldartig angeordnet, sodass ein Probenblock erzeugt wird, der Stanzzylinder aus unterschiedlichstem Gewebe enthält. Durch Schnitte senkrecht zur Richtung 100 kann dann eine dünne Schicht von Gewebematerial von diesem Probenblock abgetrennt werden und auf einem Objektträger 15 aufgebracht werden. Diese dünne Schicht 32 ist rechts in Fig. 3 dargestellt. Ein solches Aufbereitungsverfahren ist beispielsweise im Stand der Technik in WO 01/22086 offenbart. Insbesondere ist anhand von Fig. 3 zu erkennen, dass durch diese herkömmliche Aufbereitungstechnologie immer eine Vielzahl von Proben unterschiedlichsten Gewebes auf einem Objektträger angeordnet werden. Dieses Aufbereitungsverfahren hat weiterhin den Nachteil, dass alle auf dem Objektträger 15 gemeinsam vorhandenen Gewebeproben gemeinsam einer Reaktion unterzogen werden müssen, weil keine Vorkehrungen getroffen sind, um die Proben separat zu untersuchen. Abgesehen davon, gibt es im Stand der Technik derzeit keine Verfahren, um die Gewebeproben unterschiedlich und separat einzufärben. Vielmehr sehen es die gängigen Gerätschaften lediglich vor, dass derartige Objektträger in großen Mengen Schritt für Schritt einer Einzelbehandlung unterzogen werden.

Die Nachteile dieser Verfahren sind, dass sie zeitaufwändig sind, dass sie große Flüssigkeitsmengen konsumieren und dass sie keine individualisierten Untersuchungen erlauben.

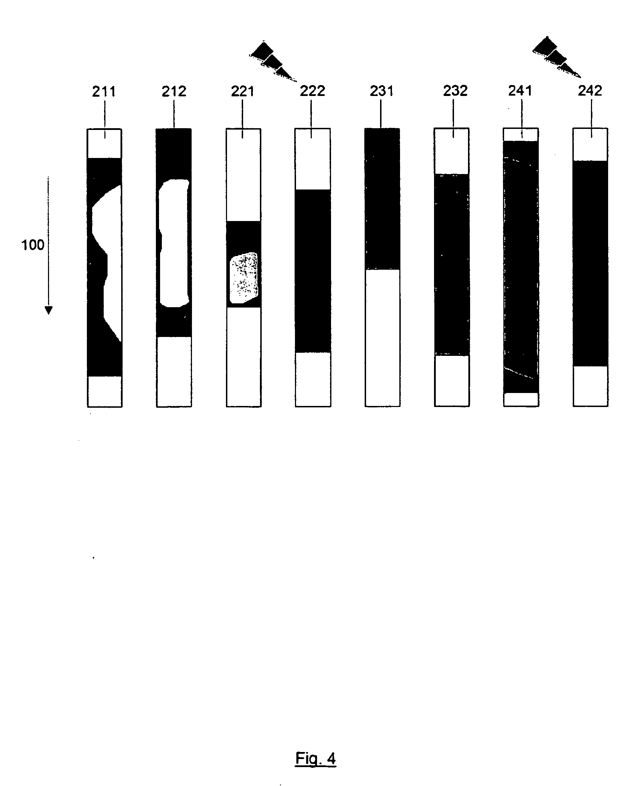

Fig. 4 veranschaulicht anhand der Tiefenausdehnung in einer Richtung 100 der unterschiedlichen Stanzzylinder 211, 212, 221, 222, 231, 232, 241 und 242 eine weitere Problematik der Aufbereitung von Gewebeproben nach Art von Gewebefeldern, wie in Fig. 3 beschrieben. Die Stanzzylinder sind hier analog zu Fig. 2 bezeichnet. Deutlich ist anhand der Tiefenausdehnung der einzelnen Zylinder in Richtung 100 zu erkennen, dass beispielsweise bei einem weit oben liegenden Schnitt in der Richtung an der die Bezugszeichen angebracht sind, zum Beispiel bei Zylinder 221 und 222 kein Gewebe erhalten werden wird, sondern lediglich Paraffin. Sodass bei einer entsprechenden Untersuchung zwar eine Schicht mit Gewebe eines Probenzylinders 212 und 231 untersucht werden kann, aber die anderen Gewebeproben ausfallen. Im Fälle von Paraffin ist dieser Ausfall nicht kritisch, weil optisch erkannt werden kann, dass an dieser Stelle kein Gewebe vorhanden ist.

Ein weiteres Problem besteht jedoch darin, dass das Gewebe, welches den zu untersuchendem Gewebe von beispielsweise 2,0 x 2,0 mm x 0,2 - 0,3 mm in Form eines Stanzzylinders entnommen wurde, sowohl in der Tiefe als auch in der Fläche inhomogen ist. Was bedeutet, dass Krebsgewebe teilweise in gesundem Gewebe eingelagert ist und je nach Anordnung des Schnittes sowohl in der Horizontalen als auch in der Vertikalen Richtung unterschiedliche Gewebeschichten durch den Stanzzylinder erfasst werden.

In der Darstellung in Fig. 4 ist gesundes Gewebe dunkel und erkranktes Gewebe hell dargestellt. Dies bedeutet, dass beispielsweise in den Zylindern 222 und 242 kein erkranktes Gewebe enthalten ist, während in den anderen Zylindern je nach der Darstellung in unterschiedlichen Schnitttiefen mal erkranktes Gewebe, das heißt Krebszellengewebe, und mal gesundes Gewebe erhalten wird. Es ist also denkbar, dass nach der Methode der Aufbereitung von Gewebefeldern, wie sie beispielsweise in Fig. 3 dargestellt ist, man einen vollständigen Gewebebereich auf einem Objektträger erhält, der auch bei optischer Inspektion keine Paraffinbereiche offenbart, dass aber trotzdem einzelne Gewebeflecken kein Krebszellengewebe enthalten. Dies ist besonders nachteilig, weil durch Probeuntersuchungen sicherzustellen ist, dass ein negatives Resultat nicht darauf basiert, dass falsches Gewebe untersucht wurde.

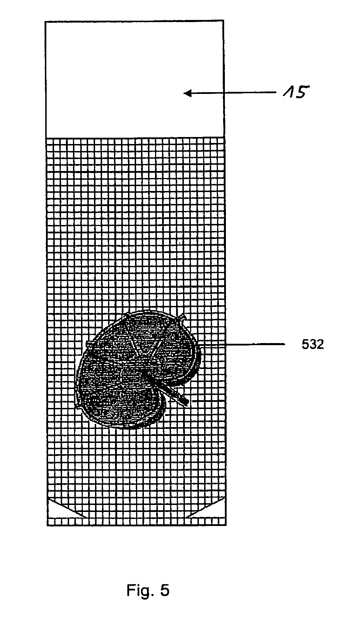

Fig. 5 veranschaulicht einen Objektträger 15, auf dem eine Gewebeprobe angeordnet ist. Der Objektträger 15 enthält eine flächige Schnittprobe 532, die beispielsweise mittels einer Färbemethode einzufärben ist, um spezifische Zellenareale sichtbar zu machen.

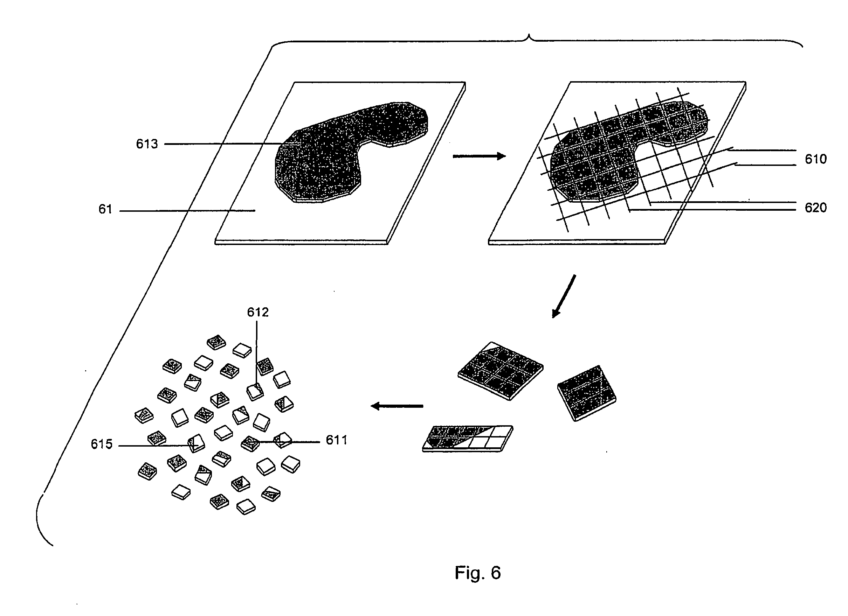

Fig. 6 zeigt anhand eines Beispiels, wie ein flächiger Gewebeschnitt in Gewebe-Substrateinheiten unterteilt wird.

Fig. 6 zeigt ein Substratmaterial 61 transparenter Art, auf dem ein flächiger Gewebeschnitt 613 aufgebracht ist. Dieser Gewebeschnitt 613 weist beispielsweise eine Dicke von 1 bis 5 µm auf und eine Größe von 1 x 1 cm. Vor der Aufbringung des Gewebeschnittes auf dem Substratmaterial, das beispielsweise elastisch ist und aus einer als Trägerfolie dienenden Polycarbonatfolie ausgeführt sein kann, kann sichergestellt werden, dass das Gewebe homogen ist, und durch optische Inspektion kann weiterhin sichergestellt werden, dass lediglich untersuchungsrelevantes Gewebematerial in diesem Gewebeschnitt enthalten ist, sodass die Nachteile des Standes der Technik, wie sie zuvor in Bezug auf Gewebebereiche in Gewebefeldern beschrieben wurden, weitestgehend ausgeschlossen werden können.

Wie Fig. 6 weiter zeigt, wird der Gewebeschnitt 613 in Richtung 610 und 620 gestückelt, sodass nachfolgend Gewebe-Substrateinheiten 611, 612 und 615 erhalten werden, von denen lediglich einige zur Veranschaulichung dargestellt sind. Diese Gewebe-Substrateinheiten können dann in Reaktionszonen bzw. -felder des Objektträgers 15 eingebracht werden, um mit Hilfe verschiedener Aufbereitungsreagenzien den Nachweis unterschiedlicher Antigene führen zu können.

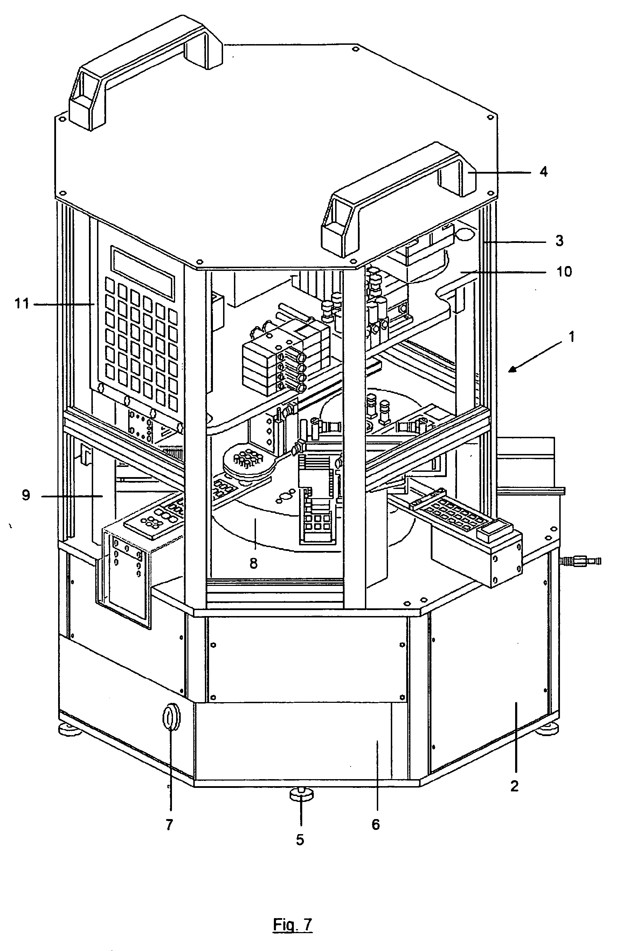

Fig. 7 zeigt eine erfindungsgemäße Vorrichtung zur automatisierten reproduzierbaren Herstellung von auf Objektträgern angeordneten zu untersuchenden Zell- oder Gewebeproben. Die Vorrichtung 1 ist als Tischgerät ausgebildet und besteht im Wesentlichen aus einem sockelartigen Gehäuse 2, auf dem eine abnehmbare Abdeckung 3 angeordnet ist, die mit dem sockelartigen Gehäuse 2 verriegelt ist. Die Abdeckung besitzt an der Oberseite zwei Griffeinheiten 4, so dass die als Tischgerät ausgebildete Vorrichtung 1 transportierbar ist.

An der Unterseite des sockelartigen Gehäuses 2 befinden sich verstellbare Füße 5, die es ermöglichen, das Tischgerät in eine horizontale Lage einzustellen. Es kann in vorteilhafter Weise vorgesehen sein, dass zur exakten Justierung Wasserwaagen oder entsprechende Einstellelemente vorgesehen sind, die aber in der Zeichnung nicht dargestellt sind.

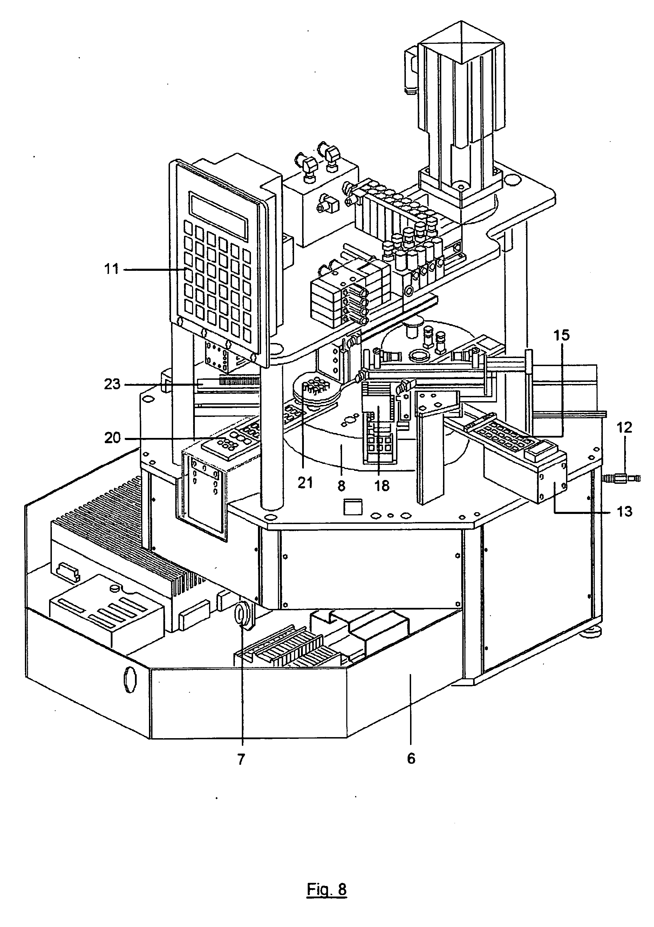

An der Unterseite ist ferner eine Schublade 6 zu erkennen, die mit einem Schloss 7 verriegelbar ist. In Fig. 8 ist die Schublade 6 in geöffnetem Zustand dargestellt, und es ist zu erkennen, dass in der Schublade die Steuereinrichtung und ein Teil der Antriebseinrichtung für die Fördereinrichtung 8 angeordnet sind. Die Antriebseinrichtung besteht im Wesentlichen aus bekannten Elementen und wird nicht im Einzelnen beschrieben.

Auf der Oberseite des sockelartigen Gehäuses 2 ist ein Rahmen 9 aus Aluminiumprofilen vorgesehen, auf dessen Oberseite ein plattenartiges Bauteil 10 zur Aufnahme weiterer Steuerungskomponenten gelagert ist, die nicht im Einzelnen beschrieben werden und zur Steuerung der nachfolgend beschriebenen Vorrichtungskomponenten dienen. Die Bedienung erfolgt dabei über ein Panel 11 an der Vorderseite der erfindungemäßen Vorrichtung 1, über welches Betriebsmodi der nachfolgend beschriebenen Bearbeitungsstationen eingestellt werden können.

Die Vorrichtung 1 verfügt ferner über pneumatische und/oder hydraulische Druckanschlüsse 12, an welche entsprechende Druckleitungen angeschlossen sind, um die zum Teil pneumatisch/hydraulisch betätigten Antriebskornponenten der Bearbeitungsstationen mit Druckenergie zu versorgen.

Zentral in der Vorrichtung 1 ist auf dem sockelartigen Gehäuse 2 die Fördereinrichtung 8 gelagert, die als Rundtisch ausgebildet ist und im Uhrzeigersinn taktweise oder kontinuierlich programmgesteuert drehbar ist. An der Peripherie dieser Fördereinrichtung sind auf der Oberseite des sockelartigen Gehäuses 2 Bearbeitungsstationen im Abstand gerastert zu einander angeordnet. Über die Eingabestation 13 wird der Fördereinrichtung 8 der Objektträger 15 in Richtung des Pfeiles 16 zugeführt. Der Objektträger 15 wird dabei in eine der Aufnahmeeinrichtungen 14 eingeschoben und dort fixiert, welche sich am oberen Randbereich in Abständen zueinander gleichmäßig verteilt an der Fördereinrichtung 8 befinden.

Sobald der Objektträger 15 mit der Aufnahmeeinrichtung 14 der Fördereinrichtung 8 verrastet ist, wird die Fördereinrichtung taktweise im Uhrzeigersinn bewegt, bis der Objektträger 15 mit der nächsten Bearbeitungsstation 17 in Deckung kommt. Hierbei handelt es sich um eine Station zur Fixierung der Proben auf dem Objektträger, in diesem Fall um eine Station, die mit einem Dispenser 18 für einen Kleber zum Auftragen von separierten positionierten Kleberrationen definierter Größe auf den Objektträger ausgestattet ist. Der Dispenser 18 ordnet entsprechend dem vorgegebenen Raster des Objektträgers 15 Kleberpunkte in den einzelnen Reaktionsfeldern des Rasters an.

Anschließend wird der Objektträger 15 der Bearbeitungsstation 19 zugeführt, die eine Stanze 20 und eine Separierungsvorrichtung 21 umfasst. Mit der Stanze 20 werden aus der von der Außenseite der Vorrichtung automatisch zugeführten, nicht dargestellten Trägerfolie mit auf die Trägerfolie gezogenen Zell- und Gewebeschnitten der Stärke von ca. 1,5 µm Zell- und Gewebesegmente 22 in Form der Gewebe-Substrateinheiten 611, 612 und 615 ausgestanzt, die mittels der Separierungseinrichtung 21 auf Abstand gebracht werden und mittels dieser Einrichtung auf dem Objektträger in den die Reaktionsfelder bildenden Rasterfeldern auf den Klebepunkten abgelegt werden.

Sobald die Zell- und Gewebesegmente 22 auf dem Objektträger 15 abgelegt sind, bewegt sich die Fördereinrichtung 8 im Uhrzeigersinn taktweise weiter und transportiert den Objektträger 15 zu der Bearbeitungsstation 23, wobei es sich hier um eine Aushärtstation für die Kleber handelt. In dieser Station wird der Objektträger 15 mittels einer UV-Lichtquelle bestrahlt und der Kleber ausgehärtet.

An die Bearbeitungsstation 23 schließen sich noch eine in der Zeichnung nicht dargestellte Beschriftungs- und/oder Etikettierungsstation an, in welcher der Objektträger mit einem Barcode beschriftet oder etikettiert wird. Es können sich ferner noch eine Kamerastation für die visuelle Erkennung der einzelnen Proben und die Auswahl geeigneter Proben sowie Abtrennung von ungeeignetem Probenmaterial anschließen. Schließlich ist auf der Rückseite der Vorrichtung eine in der Zeichnung verdeckt angeordnete Ausgabestation vorgesehen, in welcher die fertig gestellten Objektträger zur Weiterverarbeitung an eine nachfolgende Vorrichtung ausgegeben werden, wo sie einer Hitzebehandlung und einem Färbeverfahren unter Verwendung von Aufbereitungsreagenzien unterworfen werden.

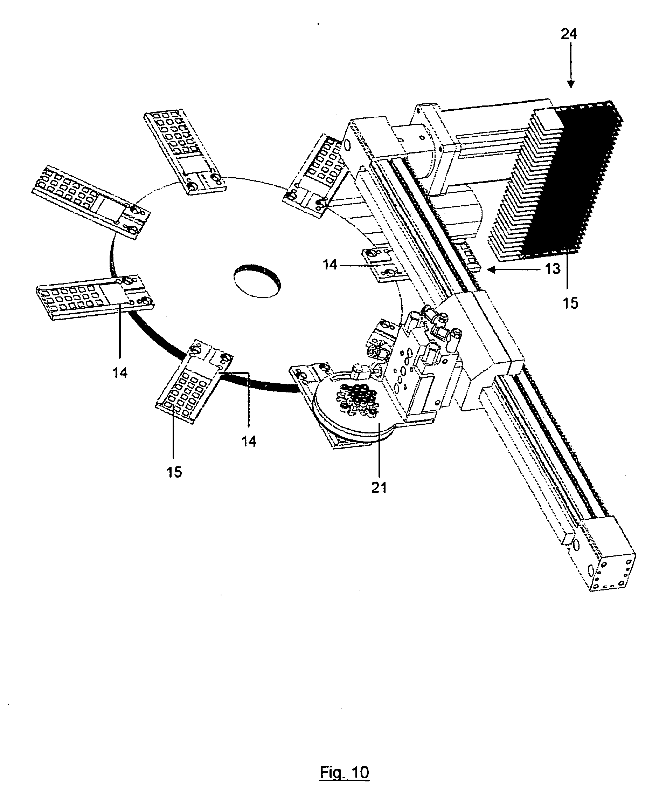

In Fig. 10 ist die Fördereinrichtung 8 deutlicher zu erkennen, die an ihrer Peripherie in gleichem Abstand zueinander angeordnete Aufnahmeeinrichtungen 14 für die Objektträger 15 aufweist. In diese Aufnahmeeinrichtungen 14 werden die Objektträger eingeschoben und den einzelnen Bearbeitungsstationen taktweise zugeführt. Es ist auch zu erkennen, dass im Bereich der Eingabestation 13 ein schematisch angedeutetes Magazin 24 mit Objektträgern 15 angeordnet ist, aus welchem die einzelnen Objektträger nacheinander der Aufnahme 14 an der Eingabestation 13 zugeführt werden.

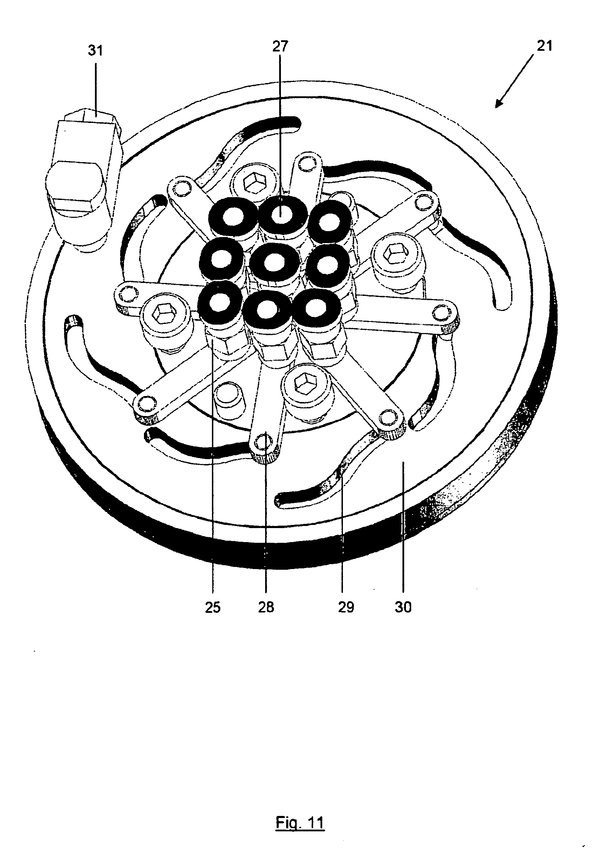

In Fig. 11 ist ein Teil der Separierungsvorrichtung 21 gezeigt, wobei zur besseren Veranschaulichung die Oberplatte weggelassen ist. Es ist zu erkennen, dass neun Zylinder 25 vorgesehen sind, die an ihrer Unterseite mit pneumatisch betätigten Saugnäpfen 26 ausgestattet sind und an ihrer Oberseite Saugluftanschlüsse 27 aufweisen. Die Zylinder 25 sind dabei an Kurvenarmen 28 gelagert, die ihrerseits in den Kurvenbahnen 29 einer Kurvenscheibe 30 verschieblich gelagert sind. Wenn die Kurvenscheibe 30 mittels des Kurbelarmes 31 verschwenkt wird, werden die Kurvenarme in den Kurvenbahnen zwangsgeführt, und die Zylinder 25 bewegen sich auf vorgegebene Positionen auf einen größeren Radius. Auf diese Art und Weise werden die an der Unterseite der Saugnäpfe angesaugten separierten Probenstücke auf ein bestimmtes Raster separiert, welches exakt dem Raster der Reaktionsfelder des Objektträgers 15 entspricht. Sobald sich die Proben in der ihnen zugedachten exakten Position befinden, werden sie mittels der Zylinder 25 auf dem Objektträger 15 abgelegt und durch den Kleber am Verrutschen gehindert.

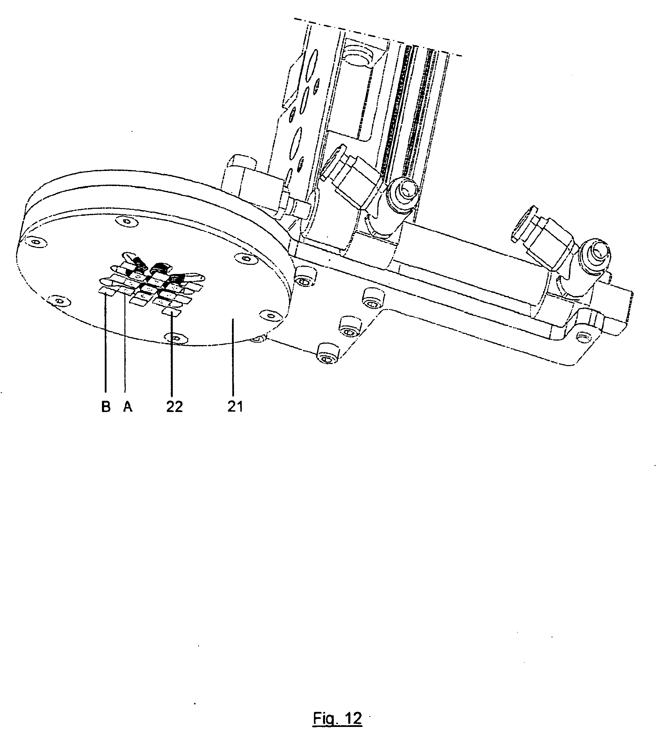

Fig. 12 zeigt eine perspektivische Ansicht der Separierungsvorrichtung 21 von unten, in der die Zell- und Gewebesegmente 22 einmal in der zusammen geschobenen Position X gezeigt sind, in welcher sie die Stanze verlassen, sowie in der separierten Position Y, in welcher sie auf dem Objektträger 15 abgelegt werden.

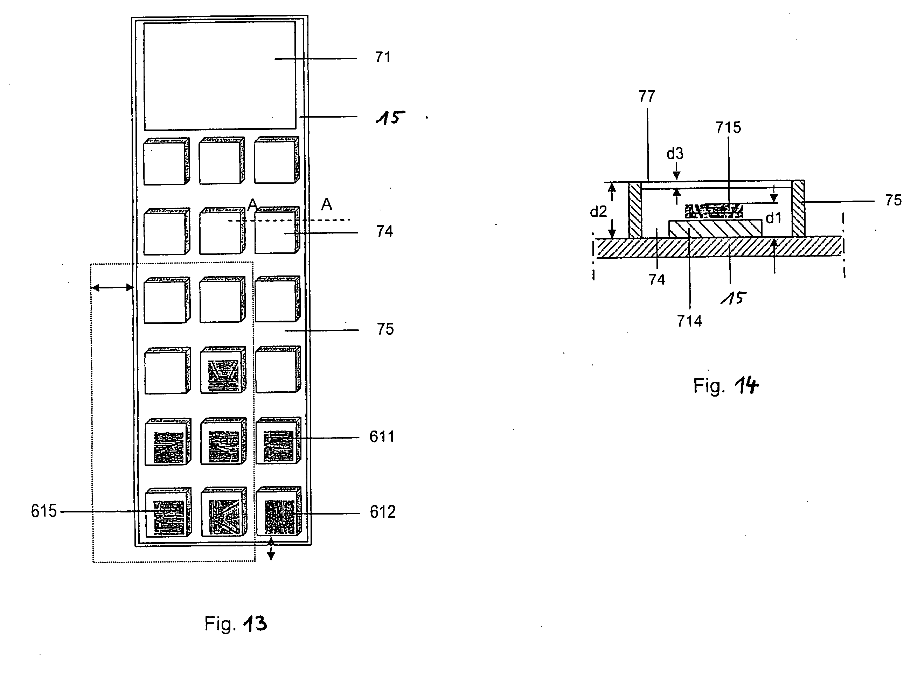

In Fig. 13 ist einen Objektträger 15 veranschaulicht. Am oberen Ende ist ein Textfeld 71 angeordnet, das beispielsweise einen Identifikationscode in Form eines Barcodes enthalten kann. Der Objektträger 15 ist beispielsweise mit einem aufgespritzten Rahmen, einer Teflonfolie oder einer Folie aus anderem hydrophoben Material beschichtet, in welche die Reaktionszonen 74 eingelassen sind. Als Beispiel sind in einzelnen Reaktionszonen Zell- und Gewebesegmente in Form von Gewebe-Substrateinheiten 611, 612 und 615 dargestellt. Die Abmessungen der Objektträger 15 betragen etwa 75 x 25 mm und die Maße der Zell- und Gewebesegmente etwa 4 x 4 mm. Jeder Objektträger ist mit 2 mal 9 Segmenten bestückt.

Beispielsweise beträgt die Abmessung einer Reaktionszone 4,5 x 4,5 mm und die seitlichen Ränder längs unten und oben betragen jeweils 1,8 mm. Die Foliendicke kann beispielsweise 0,13 mm betragen, alternativ aber auch 0,25 bis 0,28 mm. Weiterhin ist eine gestrichelte Linie A-A dargestellt, die eine Schnittlinie für die Darstellung in Fig. 14 veranschaulicht.

Fig. 14 zeigt ein Beispiel einer Reaktionszone 74. In der Reaktionszone 74 ist ein auf einem Substrat 714 angeordnetes Zell- und Gewebesegmente in Form eines Gewebepartikels 715 dargestellt, das auf einem Objektträger 15 zu liegen kommt. Insbesondere ist bei der Darstellung zu beachten, dass eine Dicke d1, das heißt die Summe der Dicke des Gewebeschnittes und des Substrates kleiner ist als eine Dicke d2, das heißt die Dicke der Trägerfolie 75, beziehungsweise einer aufgespritzten Umrandung, wobei das Dickenverhältnis so bemessen ist, dass die Reaktionszone ausreichend Flüssigkeit aufnimmt, um das Gewebepartikel 715 aufbereiten zu können, jedoch gleichzeitig keine Flüssigkeit verschwendet wird. Auf diese Weise wird sichergestellt, dass mit einer definierten Flüssigkeitsmenge entsprechend dem so vorgegebenen Reaktionsvolumen möglichst viele Gewebe-Substrateinheiten aufbereitet werden können, bzw. möglichst viele Objektträger untersucht werden können.

Mit einem derartigen Objektträger 18 können Untersuchungen an ein und demselben Gewebe zusammengefasst werden und simultan durchgeführt werden. Speziell kann ein derartiger Objektträger mittels einer Abdeckfolie versiegelt werden, anschließend patientenspezifisch archiviert werden und zur späteren Beobachtung bereitgehalten werden.

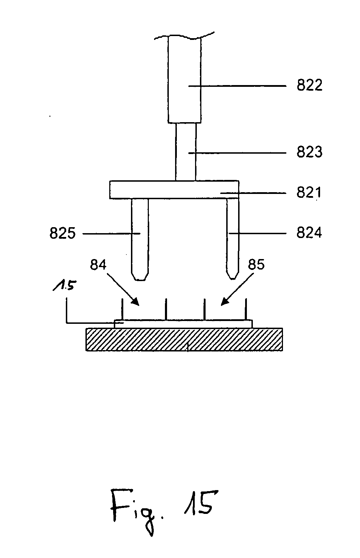

Fig. 15 zeigt schematisiert dargestellt die nachfolgende Behandlung der auf dem Objektträger 15 angeordneten Gewebe-Substrateinheiten mit Reaktionsflüssigkeiten. Die Vorrichtung weist einen Hydraulikzylinder oder Pressluftzylinder, der lineare Schubbewegung ermöglicht und einen Aktor 822 und einen damit verbundenen Aktor 823 auf. An einer Brücke 821 sind Pipetten 825 und 824 befestigt, deren Abstand so bemessen ist, dass sie gleichzeitig die Reaktionszonen 84 und 85 des Objektträgers 15 mit Aufbereitungsreagenzien beschicken können. Auf diese Weise können simultan mehrere Reaktionsflüssigkeiten gleichzeitig in unterschiedliche Reaktionszonen des Objektträgers 15 eingebracht werden, um nach Fertigstellung der mit den Proben versehenen Objektträger diese der nachfolgenden Färbebehandlung durch Zuführung der Reaktionsflüssigkeiten zu unterwerfen.

Vorteilhaft wird durch diese beispielhaft ausgeführte erfindungsgemäße Vorrichtung die Aufbereitung von mehreren Gewebe-Substrateinheiten simultan in Reaktionszonen eines Objektträgers ermöglicht, so dass zeiteffizient verschiedenste Untersuchungen am gleichen Gewebe, beispielsweise eines Patienten durchgeführt werden können. Selbstverständlich sind auch andere Zellgewebearten denkbar, wie beispielsweise biologisches Gewebe von Tieren, Pflanzen oder Saatgut, aber auch adhärente Blutbestandteile, Eiweiße oder industrielle Materialien woran derartige Untersuchungen durchzuführen sind.

Auf vorteilhafte Weise stellt so die erfindungsgemäße Vorrichtung eine kombinierte Aufbereitung und Untersuchung der Proben bereit, die zeitnah mehrere Untersuchungen zulässt. Insbesondere können beispielsweise die Abstände zwischen den einzelnen Reaktionszonen so zu bemessen sein, dass sie mit den Pipettenabständen eines Standardmaßes beispielsweise einer ELISA Platte übereinstimmen, wobei 6, 8- oder 12-Kanal Pipetten eingesetzt werden können. Je mehr Kanäle hierbei vorhanden sind, desto mehr Untersuchungen/Aufbereitungen können gleichzeitig stattfinden. Dies führt zu einer beträchtlichen Zeit- und Kostenersparnis.

Vorteilhaft können so standardisierte Untersuchungsgeräte eingesetzt werden, die lediglich auf den speziellen Anwendungsfall abzustimmen sind. Es wäre selbstverständlich denkbar, dass Probenblöcke, wie sie in Fig. 3 mit 31 bezeichnet sind, aus Gewebe von lediglich einem Patienten hergestellt werden. Insofern wäre weiter denkbar, dass nach der Methode des Standes der Technik ein Objektträger zur Verfügung gestellt werden könnte, der lediglich Probenmaterial eines einzigen Patienten enthält. Es gibt jedoch im Stand der Technik keinerlei Möglichkeiten, diesen Probenträger dann mit einzelnen Reaktionszonen zu versehen bzw. das dünne Paraffinblättchen 32 mit den Gewebeproben im Anschluss zu unterteilen und in separaten Reaktionszonen unterzubringen, weil dieses dafür viel zu empfindlich wäre, und ein definierter Reaktionszustand so nicht hergestellt werden kann.

## Patentansprüche

1. Vorrichtung (1) zur automatisierten reproduzierbaren Herstellung von auf Objektträgern (15) angeordneten zu untersuchenden Zell- oder Gewebeproben, insbesondere eines Patientenmaterials, wobei die Vorrichtung eine Mehrzahl von modularen Stationen umfasst, die jeweils einen Arbeitsschritt in einer Gesamtfolge von Arbeitsschritten ausführen, wobei die Vorrichtung (1) mindestens eine Einrichtung zum lagerichtigen Positionieren der Proben (22,611,612,615) auf einem Objektträger (15) aufweist und eine Einrichtung zum Zuführen einer mit Zell- oder Gewebeschnitten (22,611,612,615) versehenen Probenfolie aus einem ersten transparenten Substrat (61) zu einem Objektträger (15) sowie eine Einrichtung zur Segmentierung der Proben (613), und eine Separierungsvorrichtung (21) zur Separierung der Proben umfasst, und dass die Vorrichtung (1) mindestens eine Einrichtung (8), zum Fördern des bestückten Objektträgers (15) zu den einzelnen Stationen (13, 17, 19) zur weiteren Bearbeitung aufweist, **dadurch gekennzeichnet, dass** die Einrichtung zur Segmentierung der Proben (613) eine Stanze (20) umfasst, und dass die Separierungsvorrichtung (21) eine Kurvenscheibe (30) umfasst, wobei durch Verschwenken der Kurvenscheibe (30) eine Vielzahl von Greifeinrichtungen (26) über Kurvenbahnen (29) aus einer im wesentlichen zentralen Lage in eine definierte Position auf Abstand zu einander bewegbar sind.

2. Vorrichtung (1) nach Anspruch 1, **dadurch gekennzeichnet, dass** die Vorrichtung (1) eine Fördereinrichtung (8) aufweist, die zentral in der Vorrichtung gelagert ist und an deren Peripherie die modularen Stationen (13, 17, 19) verteilt angeordnet sind.

3. Vorrichtung (1) nach Anspruch 2, **dadurch gekennzeichnet, dass** die Fördereinrichtung (8) von einem drehbar gelagerten Rundtisch gebildet ist.

4. Vorrichtung (1) nach einem der vorhergehenden Ansprüche, **dadurch gekennzeichnet, dass** die Fördereinrichtung (8) auf einem sockelartigen Gehäuse (2) gelagert ist, in welchem der Antrieb und/oder die Steuerung für die Fördereinrichtung (8) aufgenommen ist/sind.

5. Vorrichtung (1) nach einem der vorhergehenden Ansprüche 1 bis 4, **dadurch gekennzeichnet, dass** die Vorrichtung eine Eingabestation (13) aufweist, über welche der Fördereinrichtung (8) ein Objektträger (15) zuführbar ist.

6. Vorrichtung (1) nach Anspruch 5, **dadurch gekennzeichnet, dass** der Eingabestation (13) ein Objektträgermagazin (24) zugeordnet ist, aus welchem Objektträger (15) programmgesteuert aufeinander folgend zuführbar sind.

7. Vorrichtung (1) nach einem der vorhergehenden Ansprüche 1 bis 4, **dadurch gekennzeichnet, dass** die Vorrichtung eine Station zur Fixierung (17) der Proben (22,611,612,615) auf einem Objektträger (15) aufweist.

8. Vorrichtung (1) nach Anspruch 7, **dadurch gekennzeichnet, dass** die Station zur Fixierung (17) der Proben (22,611,612,615) einen Dispenser (18) für einen Kleber zum Auftragen von separierten positionierten Kleberrationen definierter Größe auf einen Objektträger(15) aufweist.

9. Vorrichtung (1) nach Anspruch 1, **dadurch gekennzeichnet, dass** die Greifeinrichtungen von Zylindern (25) mit pneumatisch betätigten Saugnäpfen (26) gebildet sind.

10. Vorrichtung (1) nach Anspruch 1, **dadurch gekennzeichnet, dass** die Separierungseinrichtung (21) zwischen der Stanze (20) und dem Objektträger (15) bewegbar gelagert ist.

11. Vorrichtung (1) nach einem der vorhergehenden Ansprüche, **dadurch gekennzeichnet, dass** die Vorrichtung eine Station zum Aushärten (23) des Klebers aufweist.

12. Vorrichtung (1) nach einem der vorhergehenden Ansprüche 1 bis 4, **dadurch gekennzeichnet, dass** die Vorrichtung eine Beschriftungs- und/oder Etikettierungsstation aufweist, in welcher der Objektträger insbesondere mit einem Barcode beschriftet oder etikettiert wird.

13. Vorrichtung (1) nach einem der vorhergehenden Ansprüche 1 bis 4, **dadurch gekennzeichnet, dass** die Vorrichtung eine Kamerastation für die visuelle Erkennung der einzelnen Proben und die Auswahl geeigneter Proben sowie Abtrennung von ungeeignetem Probenmaterial aufweist.

14. Vorrichtung (1) nach einem der vorhergehenden Ansprüche 1 bis 4, **dadurch gekennzeichnet, dass** die Vorrichtung eine Ausgabestation aufweist, in welcher die fertig gestellten Objektträger (15) zur Weiterverarbeitung an eine nachfolgende Vorrichtung ausgegeben werden.

15. Verfahren zur automatisierten reproduzierbaren Herstellung von auf Objektträgern angeordneten zu untersuchenden Zell- oder Gewebeproben, insbesondere eines Patientenmaterials, unter Verwendung einer Vorrichtung (1) nach einem der Ansprüche 1 bis 14 und einem Objektträger (15), wobei der Objektträger (15) mehrere Reaktionszonen (84, 85) in gleichmäßigem ersten Abstand aufweist, wobei Gewebe-Substrateinheiten (22,611,612,615) in den Reaktionszonen (84, 85) angeordnet sind, wobei das Substrat (61) flexibel und transparent ausgestaltet ist und zusammen mit der Zell- oder Gewebeproben eine erste Dicke (d1) aufweist, und wobei der Objektträger (15) hydrophobe Umrandungen (75) der Reaktionszonen (84, 85) mit einer ersten Höhe (d2) aufweist, wobei die Vorrichtung eine Mehrzahl von modularen Stationen umfasst, die jeweils einen Arbeitsschritt in einer Gesamtfolge von Arbeitsschritten ausführen, **dadurch gekennzeichnet, dass** einzelne Objektträger (15) kontinuierlich über eine Eingabestation (13) einer Fördereinrichtung (8) zugeführt und an dieser fixiert werden, dass die Fördereinrichtung jeden Objektträger (15) nacheinander einer Fixierungsstation (17) für den Auftrag eines Fixierungsmittels, einer Beschickungsstation (19) für die automatische lagerichtige Beschickung des Objektträgers (15) mit segmentierten Proben, einer Aushärtstation (23) für das Fixiermittel, einer Beschriftungsstation, einer Scanner- und Lesestation, bzw. einer Kamerastation und einer Ausgabestation zugeführt werden, an welcher sie für eine weitere Bearbeitung an eine nachfolgende Vorrichtung ausgegeben werden.

16. Verfahren nach Anspruch 15, **dadurch gekennzeichnet, dass** die Proben der Beschickungsstation in Form von auf einer Trägerfolie (75) gezogenen Zell- oder Gewebeschnitten, insbesondere mit einer Stärke von 1,5 µm, zugeführt werden, aus der Folie ausgestanzt und separiert werden und in einem vorgegebenen Raster auf dem mit einem Fixiermittel versehenen Objektträger (15) abgesetzt werden.

17. Verfahren nach Anspruch 16, **dadurch gekennzeichnet, dass** das Fixiermittel in einer nachfolgenden Behandlungsstation durch Wärmebehandlung, insbesondere durch UV-LichtBestrahlung ausgehärtet wird.

18. Verfahren nach einem der vorhergehenden Ansprüche 15 bis 17, **dadurch gekennzeichnet, dass** der ausgegebene Objektträger (15) einer nachfolgenden Hitze- und Färbebehandlung unterworfen wird.

## Claims

1. Apparatus (1) for the automated, reproducible production of cell or tissue samples, particularly of a patient material, which are to be examined and are arranged on specimen carriers (15), wherein the apparatus includes a plurality of modular stations, which perform respective working steps in a sequence of working steps, wherein the apparatus (1) includes at least one device for the positionally correct positioning of the samples (22, 611, 612, 615) on a specimen carrier (15) and a device for supplying a sample sheet of a first transparent sub strate (61), which is provided with cell or tissue slices (22, 611, 612, 615), to a specimen carrier (15) and a device for segmenting the samples and a separation device (21) for separating the samples and that the apparatus (1) has at least one device (8) for conveying the populated specimen carrier (15) to the individual stations (13, 17, 19) for further processing, **characterised in that** the device for segmenting the samples (613) includes a punch (20) and that the separating device (21) includes a cam disk (30), wherein as a result of pivotal movement of the cam disk (30) a plurality of gripping devices (26) are moveable by way of cam tracks (29) out of a substantially central position into a defined position spaced from one another.

2. Apparatus (1) as claimed in claim 1, **characterised in that** the apparatus (1) has a conveying device (8), which is mounted centrally in the apparatus and the modular stations (13, 17, 19) are arranged distributed on its periphery.

3. Apparatus (1) as claimed in claim 2, **characterised in that** the conveying device (8) is constituted by a rotatably mounted round table.

4. Apparatus (1) as claimed in one of the preceding claims, **characterised in that** the conveying device (8) is mounted on a pedestal-like housing (2), in which the drive and/or the control for the conveying device is/are accommodated.

5. Apparatus (1) as claimed in claim one of the preceding claims 1 to 4 **characterised in that** the apparatus includes an input station (13), via which a specimen carrier (15) may be supplied to the conveying device (8).

6. Apparatus (1) as claimed in claim 5, **characterised in that** associated with the input station (13) there is a specimen carrier magazine (24), from which specimen carriers (15) maybe supplied successively in a programme controlled manner.

7. Apparatus (1) as claimed in one of the preceding claims 1 to 4, **characterised in that** the apparatus includes a station for fixing (17) the samples (22, 611, 612, 615) on a specimen carrier (15).

8. Apparatus (1) as claimed in claim 7, **characterised in that** the station for fixing (17) the samples (22, 611, 612, 615) includes a dispenser (18) for an adhesive for applying separated, positioned amounts of adhesive of a defined size on a specimen carrier (15).

9. Apparatus (1) as claimed in claim 1, **characterised in that** the gripping devices are constituted by cylinders (25) with pneumatically actuated suction cups (26).

10. Apparatus (1) as claimed in claim 1, **characterised in that** the separating device (21) is moveably mounted between the punch (20) and the specimen carrier (15).

11. Apparatus (1) as claimed in one of the preceding claims, **characterised in that** the apparatus includes a station for curing (23) the adhesive.

12. Apparatus (1) as claimed in one of the preceding claims 1 to 14, **characterised in that** the apparatus includes a marking and/or labelling station, in which the specimen carrier is marked or labelled, particularly with a barcode.

13. Apparatus (1) as claimed in one of the preceding claims 1 to 4, **characterised in that** the apparatus includes a camera station for the visual recognition of the individual samples and the selection of suitable samples and the separation of unsuitable sample material.

14. Apparatus (1) as claimed in one of the preceding claims 1 to 4, **characterised in that** the apparatus includes an output station, in which the finished sample carriers (15) are discharged to a subsequent device for further processing.

15. A method for the automated, reproducible production of cell or tissue samples, particularly of a patient material, which are to be examined and are arranged on specimen carriers, using an apparatus (1) as claimed in one of claims 1 to 14 and a sample carrier (15), wherein the sample carrier (15) has a number of reaction zones (84, 85) at a uniform first spacing, wherein tissue sub strate units (22, 611, 612, 615) are arranged in the reaction zones (84, 85) wherein the sub strate (61) is of flexible and transparent construction and, together with the cell or tissue samples, has a first thickness (d1), and wherein the sample carrier (15) has hydrophobic edges (75) to the reaction zones (84, 85) with a first height (d2), wherein the apparatus includes a plurality of modular stations, which each performs a respective working step in a sequence of working steps, **characterised in that** individual sample carriers (15) are supplied continuously via an input station (13) to a conveying device (8) and are fixed to it, that the conveying device supplies each sample carrier (15) successively to a fixing station (17) for the application of a fixing agent, a loading station (19) for the automatic, positionally correct loading of the sample carrier (15) with segmented samples, a curing station (23) for the fixing agent, a marking station, a scanner and reading station or a camera station and an output station, at which they are discharged to a subsequent device for further processing.

16. A method as claimed in claim 15, **characterised in that** the samples are supplied to the loading station in the form of cell or tissue slices, particularly with thickness of 1.5 µm, drawn onto a carrier film (75), stamped out of the film and separated and are deposited in a predetermined pattern on the sample carrier (15) provided with a fixing agent.

17. A method as claimed in claim 16, **characterised in that** the fixing agent is cured in a subsequent treatment station by heat treatment, particularly by UV radiation.

18. A method as claimed in one of the preceding claims 15 to 17, **characterised in that** the discharged sample carrier (15) is subjected to a subsequent heat and colouration treatment.

## Revendications

1. Dispositif (1) de production automatisée reproductible d'échantillons cellulaires ou tissulaires à analyser disposés sur des porte-objets (15), échantillons en particulier d'un matériau issu d'un patient, le dispositif comprenant une pluralité de stations modulaires accomplissant chacune une étape opératoire dans une succession globale d'étapes opératoires, le dispositif (1) présentant au moins un organe pour le positionnement en position correcte des échantillons (22, 611, 612, 615) sur un porte-objet (15), et un organe pour l'amenée d'une feuille d'échantillons munie de tranches (22, 611, 612, 615) cellulaires ou tissulaires, composée d'un premier substrat (61) transparent, à un porte-objet (15), ainsi qu'un organe pour accomplir la segmentation des échantillons (613) et un dispositif de séparation (21) pour la séparation des échantillons, et le dispositif (1) comprend au moins un organe (8) pour transporter le porte-objet (15) garni aux stations (13, 17, 19) individuelles pour la suite du traitement, **caractérisé en ce que** l'organe de segmentation des échantillons (613) comprend une estampeuse (20), et **en ce que** le dispositif de séparation (21) comprend un disque de came (30), où, par un pivotement du disque de came (30), une pluralité de dispositifs de préhension (26) sont déplaçables sur des pistes de came (29) à distance les uns des autres, à partir d'une position pratiquement centrale, en une position définie.

2. Dispositif (1) selon la revendication 1, **caractérisé en ce que** le dispositif (1) présente un organe de transport (8), monté centralement dans le dispositif et à la périphérie duquel les stations (13, 17, 19) modulaires sont disposées de manière répartie.

3. Dispositif (1) selon la revendication 2, **caractérisé en ce que** l'organe de transport (8) est formé par une table ronde, montée à rotation.

4. Dispositif (1) selon l'une des revendications précédentes, **caractérisé en ce que** l'organe de transport (8) est monté sur un boîtier (2) du genre d'un socle, dans lequel l'entraînement et/ou la commande pour l'organe de transport (8) est/sont logé(es).

5. Dispositif (1) selon l'une des revendications 1 à 4 précédentes, **caractérisé en ce que** le dispositif présente une station d'insertion (13), par l'intermédiaire de laquelle un porte-objet (15) est susceptible d'être amené à l'organe de transport (8).

6. Dispositif (1) selon la revendication 5, **caractérisé en ce qu'**à la station d'insertion (13) est associé un magasin de porte-objets (24), d'où des porte-objets (15) sont susceptibles d'être amenés, à la suite les uns des autres, sous la commande d'un programme.

7. Dispositif (1) selon l'une des revendications 1 à 4 précédentes, **caractérisé en ce que** le dispositif présente une station de fixation (17), pour la fixation des échantillons (22, 611, 612, 615) sur un porte-objet (15).

8. Dispositif (1) selon la revendication 7, **caractérisé en ce que** la station de fixation (17), pour la fixation des échantillons (22, 611, 612, 615), présente un distributeur (18) pour un adhésif, pour application de rations d'adhésif positionnées séparément, de taille définie, sur un porte-objet (15).

9. Dispositif (1) selon la revendication 1, **caractérisé en ce que** les dispositifs de préhension sont formés par des cylindres (25) munis de ventouses (26) actionnées pneumatiquement.

10. Dispositif (1) selon la revendication 1, **caractérisé en ce que** le dispositif de séparation (21) est monté déplaçable entre l'estampeuse (20) et le porte-objet (15).

11. Dispositif (1) selon l'une des revendications précédentes, **caractérisé en ce que** le dispositif présente une station de durcissement (23) de l'adhésif.

12. Dispositif (1) selon l'une des revendications 1 à 4, précédentes, **caractérisé en ce que** le dispositif présente une station de marquage et/ou d'étiquetage, dans laquelle le porte-objet est marqué ou étiqueté, en particulier avec un code-barres.

13. Dispositif (1) selon l'une des revendications 1 à 4 précédentes, **caractérisé en ce que** le dispositif présente une station équipée de caméra, pour l'identification visuelle des différents échantillons et la sélection d'échantillons appropriés, ainsi que la séparation de matériau d'échantillon impropre.

14. Dispositif (1) selon l'une des revendications 1 à 4 précédentes, **caractérisé en ce que** le dispositif présente une station de distribution, dans laquelle les porte-objets (15) achevés sont distribués, pour retraitement à un dispositif installé en aval.

15. Procédé de production automatisée reproductible d'échantillons cellulaires ou tissulaires à analyser disposés sur des porte-objets, échantillons en particulier d'un matériau issu d'un patient, avec utilisation d'un dispositif (1) selon l'une des revendications 1 à 14, et d'un porte-objet (15), le porte-objet (15) présentant plusieurs zones de réaction (84, 85) disposées à un premier espacement régulier, des unités de substrat tissulaire (22, 611, 612, 615) étant disposées dans les zones de réaction (84, 85) le substrat (61) étant de nature flexible et transparente et présentant, conjointement avec les échantillons cellulaires ou tissulaires, une première épaisseur (d1), et le porte-objet (15) présentant des bordures (75) hydrophobes des zones de réaction (84, 85) d'une première hauteur (d2), le dispositif comprenant une pluralité de stations modulaires accomplissant chacune une étape opératoire, dans une succession globale d'étapes opératoires, **caractérisé en ce que** des porte-objets (15) individuels sont amenés en continu, par l'intermédiaire d'une station d'insertion (13), à un organe de transport (8) et fixés à celui-ci, **en ce que** l'organe de transport transporte chaque porte-objet (15) l'un après l'autre à une station de fixation (17) pour l'application d'un agent de fixation, à une station de garnissage (19) pour le garnissage automatique en position correcte du porte-objet (15) avec des échantillons segmentés, à une station de durcissement (23) pour l'agent de fixation, à une station de marquage, à une station à scanneur et de lecture, ou à une station équipée de caméra et à une station de distribution, à laquelle ils sont distribués à un dispositif subséquent, pour subir un autre traitement.

16. Procédé selon la revendication 15, **caractérisé en ce que** les échantillons sont amenés à la station de garnissage sous la forme de tranches cellulaires ou tissulaires, tirées sur une feuille de support (7, 5), en particulier d'une épaisseur de 1,5 µm, découpées par estampage à partir de la feuille et séparées, et déposées, selon un motif prédéterminé, sur le porte-objet (15) muni d'un agent de fixation.

17. Procédé selon la revendication 16, **caractérisé en ce que**, dans une station de traitement subséquente, l'agent de fixation est durci par un traitement thermique, en particulier par irradiation à la lumière UV.

18. Procédé selon l'une des revendications 15 à 17, **caractérisé en ce que** le porte-objet (15) distribué est soumis à un traitement à la chaleur ou de coloration subséquent.
